# EUROPÄISCHE PATENTSCHRIFT

(11) **EP 1 037 733 B1**
(45) Veröffentlichungstag und Bekanntmachung des Hinweises auf die Patenterteilung: **12.11.2003**
(21) Anmeldenummer: 98963553.7
(22) Anmeldetag: 10.12.1998
(51) Int. Cl.: B27N 3/00, C08J 9/08, C08G 18/34, C08L 97/02

(54) **FORMKÖRPER AUS HOLZTEILCHEN UND PU-BINDEMITTEL, IHRE HERSTELLUNG UND VERWENDUNG**
SHAPED BODY MADE FROM WOOD PARTICLES AND A PU BONDING AGENT, USE AND PRODUCTION THEREOF
CORPS MOULES CONSTITUES DE PARTICULES DE BOIS ET D'UN LIANT AU POLYURETHANNE, LEUR PRODUCTION ET LEUR UTILISATION

(30) Priorität: 17.12.1997 DE 19756154
(43) Veröffentlichungstag der Anmeldung: 27.09.2000
(73) Patentinhaber: Henkel Kommanditgesellschaft auf Aktien, 40589 Düsseldorf (DE); Striewski, Hans Reinhard, 24787 Fockbeck (DE)
(72) Erfinder: STRIEWSKI, Hans, Reinhard, D-24787 Fockbek (DE); THIELE, Lothar, D-40764 Langenfeld (DE); KOHLSTADT, Peter, D-42549 Velbert (DE)
(86) Internationale Anmeldenummer: EP9808048
(87) Internationale Veröffentlichungsnummer: WO99030882

(56) Entgegenhaltungen:
- WO-A-97/03794
- DE-A- 4 325 014
- US-A- 3 557 027
- US-A- 4 417 002
- US-A- 5 025 039
- US-A- 5 093 382

## Beschreibung

Die vorliegende Erfindung betrifft einen Formkörper, der im wesentlichen aus folgenden Komponenten besteht:
A) Holzteilchen und/oder cellulosehaltiges Material (Komponente A) und
B) poröses PU-Bindemittel (Komponente B), wobei das Gewichtsverhältnis der Komponente B) zu der Komponente A) im Bereich von 0,05 bis 1,0 liegt und
wobei der Formkörper durch Umsetzung mindestens eines Polyisocyanates mit mindestens einem Polyol und mindestens einem Treibmittel in Gegenwart der Komponente A) bei einem Anfangsdruck von wenigstens 1 kp/cm² erhältlich ist.

Ein derartiger Formkörper ist in der WO 97/03794 und auch in der DE 19604575 beschrieben.

In beiden Fällen wird Wasser als Treibmittel verwendet. Da die Holzteilchen je nach Art und Lagerbedingungen unterschiedliche Mengen an Wasser enthalten, ist eine ständige Kontrolle und Korrektur des Wassergehaltes der Holzteilchen notwendig, wenn man reproduzierbare Ergebnisse erhalten will.

Dieser Nachteil soll vermieden werden, um reproduzierbare Formkörper insbesondere mit hohen Festigkeitswerten zu erhalten.

Die Lösung dieser Aufgabe ist den Patentansprüchen zu entnehmen. Sie besteht kennzeichnungsgemäß darin, daß als Treibmittel Carbonsäure verwendet wird.

Gegenstand der Erfindung ist somit ein Formkörper, bestehend im wesentlichen aus
A) Holzteilchen und/oder cellulosehaltigem Material (Komponente A) und
B) einem porösen PU-Bindemittel (Komponente B),
wobei das Gewichtsverhältnis der Komponente B) zu der Komponente A) im Bereich von 0,05 bis 1,0 liegt und
wobei der Formkörper durch Umsetzung mindestens eines Polyisocyanates mit mindestens einem Polyol und/oder Polyamin und mindestens einem Treibmittel in Gegenwart der Komponente A) bei einem Anfangsdruck von wenigstens 1 kp/cm² erhältlich ist, dadurch gekennzeichnet, daß das Treibmittel eine Carbonsäure enthält.

Das im Rahmen des erfindungsgemäßen Formkörpers verwendete Zweikomponenten-Polyurethan-Bindemittel besteht im wesentlichen aus einem Reaktionsprodukt mindestens eines Polyols bzw. Polyamins mit mindestens einem Polyisocyanat, wobei zur Porenbildung als Treibmittel noch mindestens eine Carbonsäue sowie gegebenenfalls noch Wasser hinzukommen. Anstelle von Polyolen bzw. Polyaminen und Carbonsäuren können auch Hydroxycarbonsäuren bzw. Aminocarbonsäuren eingesetzt werden, wobei deren Funktionalität auch größer als 1 sein kann.

Die Polyisocyanate sind mehrfunktionell. Vorzugsweise enthalten die geeigneten mehrfunktionellen Isocyanate im Mittel 2 bis höchstens 5, vorzugsweise bis 4 und insbesondere 2 oder 3 NCO-Gruppen. Beispielsweise seien als geeignete Isocyanate genannt Phenylisocyanat, 1,5-Naphthylendiisocyanat, 4,4'-Diphenylmethandiisocyanat (MDI), hydriertes MDI (H₁₂MDI), Xylylendiisocyanat (XDI), m- und p-Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-lsocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Polyisocyanate mit rekationsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thioglykol oder Dihydroxydihexylsulfid. Weitere wichtige Diisocyanate sind Trimethylhexamethylendiisocyanat, 1,4-Diisocyanatbutan, 1,12-Diisocyanatododecan und Dimerfettsäurediisocyanat.

Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalamid, Caprolactam partiell oder vollständig umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure. Vorzugsweise besteht die Isocyanatkomponente a) zu mehr als 30 Gew.-%, insbesondere zumindest überwiegend, vorzugsweise vollständig, aus aromatischen isocyanaten wie MDI.

Im allgemeinen werden aromatische Isocyanate bevorzugt, ebenso oligomerisierte NCO-endständige Addukte aus den oben genannten Isocyanaten und Polyolen, Polyaminen oder Aminoalkoholen. Jedoch vermögen - wider Erwarten - auch aliphatische und cycloaliphatische lsocyanate schon bei Raumtemperatur schnell und vollständig zu reagieren.

Interesse verdienen teilweise verkappte Polyisocyanate, welche die Bildung selbstvernetzender Polyurethane ermöglichen, z.B. dimeres Toluylen-diisocyanat. Schließlich können auch Prepolymere eingesetzt werden, also Oligomere mit mehreren Isocyanatgruppen. Sie werden bekanntlich bei einem großen Überschuß von monomerem Polyisocyanant in Gegenwart von z.B. Diolen erhalten. Auch Isocyanuratisatisierungsprodukte des HDI und Biuretisierungsprodukte des HDI sind möglich.

Als Di- oder Polyisocyanate werden vorzugsweise die aromatischen Isocyanate verwendet, z.B. Diphenylmethandiisocyanat, entweder in Form der reinen Isomeren, als Isomerengemisch der 2,4'-/4,4'-Isomeren oder auch das mit Carbodiimid verflüssigte Diphenylmethandiisocyanat (MDI), das z.B. unter dem Handelsnamen Isonate 143 L bekannt ist, sowie das sogenannte "Roh-MDI", d.h., die Isomeren/Oligomerenmischung des MDI, wie sie z.B. unter dem Handelsnamen PAPI bzw. Desmodur VK im Handel erhältlich sind. Weiterhin können sogenannte "Quasi -Prepolymere", d.h. Umsetzungsprodukte des MDI bzw. des Toluylendiisocyanates (TDI) mit niedermolekularen Diolen, wie z.B. Ethylenglykol, Diethyenglykol, Propylenglykol, Dipropylenglykol oder Triethylenglykol, verwendet werden.

Als Polyole für das Bindemittel eignen sich vorzugsweise flüssige Polyhydroxyverbindungen insbesondere mit zwei bzw. drei Hydroxylgruppen pro Polyether- und/oder Polyester-Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eigesetzt werden. Eine weitere Gruppe von vorzugsweise einzusetzenden Polyetherpolyolen sind die Polytetramethylenglykole, die z.B. durch die saure Polymerisation von Tetrahydrofuran hergestellt werden. Dabei liegt der Molekulargewichtsbereich der Polytetramethylenglykole zwischen 200 und 6000, vorzugsweise im Bereich von 40 bis 4000.

Weiterhin sind als Polyole die flüssigen Polyester geeignet, die durch Kondensation von Di- bzw. Tricarbonsäuren, wie z.B. Adipinsäure, Sebazinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polesterpolyole können beispielweise durch vollständige Ringöffnung von epoxidierten Triglyzeriden eines wenigstens teilweise olefinisch ungesättigten Fettsäure-enthaltenden Fettgemischtes mit einem oder mehreren Alkoholen mit 1 bis 12 C-Atomen und anschließender partieller Umsterung der Triglyzerid-Derivate zu Alkylesterpolyolen mit 1 bis 12 C-Atomen im Alkylrest hergestellt werden. Weitere geeignete Polyole sind Polycarbonatpolyole und Dimerdiole (Fa. Henkel) sowie insbesondere Rizinusöl und dessen Derivate. Auch Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.
Insbesondere ist die Polyol-Komponente eine Diol/Triol-Mischung aus Polyetherund Polyester-Polyolen.

Unter einem "Treibmittel" werden nicht nur Treibgase, sondern auch solche Stoffe verstanden, die unter Einwirkung von Wärme oder Chemikalien Treibgase entwickeln. Im vorliegenden Fall reagieren die Carbonsäuren mit Isocyanaten in Gegenwart von Katalysatoren unter Abspaltung von CO₂ zu Amiden.

Unter "Carbonsäuren" werden Säuren verstanden, die eine oder mehrere
- vorzugsweise bis zu drei - Carboxyl-Gruppen (-COOH) und mindestens 2, vorzugsweise 5 bis 400 C-Atome enthalten. Die Carboxyl-Gruppen können mit gesättigten oder ungesättigten, linearen oder verzweigten Alkyl- oder Cycloalkyl-Resten oder mit aromatischen Resten verbunden sein. Sie können weitere Gruppen wie Ether-, Ester-, Halogen-, Amid-, Amino-, Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOH-terminierte Polyester, Polyether oder Polyamide, Dimerfettsäuren und Trimerfettsäuren. Konkrete Beispiele für die Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt: Adipinsäure, Sebacinsäure, Isophthalsäure, Terephthalsäure, Trimellitsäure, Phthalsäure, Hexahydrophthalsäure, Tetrachlorphthalsäure, Oxalsäure, Mukonsäure, Bernsteinsäure, Fumarsäure, Ricinolsäure, 12-Hydroxystearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Ester von Polycarbonsäuren oder Carbonsäuregemischen, die sowohl COOH- als auch OH-Gruppen besitzen, eingesetzt werden wie Ester von TMP [C₂H₅-C(CH₂OH)₃], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zucker, Stärke, Cellulose) und Ringöffnungsprodukte von Epoxiden mit Polycarbonsäuren.

Zu den "Carbonsäuren" zählen neben den Amino-Carbonsäuren bevorzugt "Hydroxycarbonsäuren". Unter "Hydroxycarbonsäuren" sind Monohydroxymonocarbonsäuren, Monohydroxypolycarbonsäuren, Polyhydroxymonocarbonsäuren und Polyhydroxypolycarbonsäuren einschließlich der entsprechenden Hydroxyalkoxycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten. Die Polyhydroxymonocarbonsäuren und die Polyhydroxypolycarbonsäuren einschließlich der entsprechenden Hydroxyalkoxycarbonsäuren werden zu den Polyhydroxyfettsäuren zusammengefaßt. Die vorzugsweise verwendeten Dihydroxyfettsäuren sowie ihre Herstellung werden in der DE-OS 33 18 596 und der EP 237 959 beschrieben, auf die ausdrücklich Bezug genommen wird.

Die erfindungsgemäß verwendeten Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen werden natürliche Fettsäuren meistens als technische Mischungen eingesetzt. Diese Mlschungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile oder aber Polyhydroxyalkoxycarbonsäuren mit Doppelbindungen enthalten können. Geeignet sind hier also nicht nur die reinen Polyhydroxyfettsäuren, sondem auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40 %, bevorzugt > 60 %, aufweisen. Beispiele hierfür sind käuflich erhältliche, natürliche Rohstoffe wie z.B. Rindertalg mit einer Kettenverteilung von 67 % Ölsäure, 2 % Stearinsäure, 1 % Heptadecansäure, 10 % gesättigte Säuren der Kettenlänge C₁₂ bis C₁₆, 12 % Linolsäure und 2 % gesättigte Säuren >C₁₈ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Diese Produkte können nach Ringöfffnung kurz destilliert werden, um die ungesättigten Fettsäureesteranteile zu reduzieren. Weiterführende Reinigungsschritte (z.B. länger anhaltende Destillation) sind ebenfalls möglich.

Bevorzugt leiten sich die erfindungsgemäß verwendeten Polyhydroxyfettsäuren von einfach ungesättigten Fettsäuren ab, z.B. von 4,5-Tetradecensäure, 9,10-Tetradecensäure, 9,10-Pentadecensäure, 9,10-Hexadecensäure, 9,10-Heptadecensäure, 6,7-Octadecensäure, 9,.10-Octadecensäure, 11,12-Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cis- als auch trans-Isomere von allen genannten Fettsäuren sind geeignet.

Geeignet sind auch Polyhydroxyfettsäuren, die sich von weniger häufig vorkommenden ungesättigten Fettsäuren herleiten, wie Decyl-12-ensäure, Stilingsäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13-Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Ein Hydroxyalkoxyrest der Polyhydroxyfettsäuren leitet sich von dem Polyol ab, das zur Ringöffnung des epoxidierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutandiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z.B. Glycerin und Trimethylolpropan sowie deren Addukte von Ethylenoxid und/oder Propylenoxid mit Molekulargewichten bis zu 1 500. Es-werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z.B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppen-tragende Amine bzw. Amincarbonsäuren zur Ringöffnung eingesetzt werden.

Bevorzugt werden jedoch Dihydroxyfettsäuren, insbesondere aus epoxidierten ungesättigten Fettsäuren und Diolen hergestellt. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechenden Ringöffnungsprodukte mit Diolen und deren Vemetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestensx 6, CH₂-Einheiten von der Carboxygruppe getrennt.
Bevorzugte Dihydroxyfettsäuren sind:
9,10-Dihydroxypalmitinsäure, 9,10-Dihydroxystearinsäure und 13,14-Dihydroxybehensäure sowie deren 10,9- bzw. 14,13-lsomere.

Auch mehrfach ungesättigte Fettsäuren sind geeignet, z.B. Linolsäure, Linolensäure und Ricininsäure.
Als konkretes Beispiel für eine aromatische Carbonsäure sei die Zimtsäure genannt.
Bevorzugt sind Carbonsäuren, die aus Fetten herstellbar sind.

Wenn die CO₂-Abspaltung bereits bei Raumtemperatur starten soll, ist es zweckmäßig, Amino-substituierte Pyridine und/oder N-substituierte Imidazole als Katalysatoren zu verwenden. Besonders geeignet sind 1-Methylimdiazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylaminopyridin, 4-Pyrrolidinopyridin, 4-Morpholino-pyridin, 4-Methylpyridin und N-Dodecyl-2-Methyl-imidazol.

Die obengenannten Ausgangsstoffe für das PU-Bindemittel, nämlich Polyisocyanat, Polyol, Polyamide, Carbonsäuren und Stoffe mit mindestens einer Hydroxyl-, Amin- oder Carboxyl-Gruppe sowie Katalysatoren, werden in folgenden Mengenverhältnissen eingesetzt: Auf ein Äquivalent lsocyanat kommen 0,1 bis 1, vorzugsweise 0,1 bis 0,8 Äquivalente einer Mischung aus Carbonsäure und Alkohol und 0,0001 bis 0,5, vorzugsweise 0,001 bis 0,1 Äquivalente Amin-Katalysator, wobei das Verhältnis Alkohol : Säure 20 :1 bis 1 : 20 betragen kann. Für den Fall, daß kein Alkohol oder Polyamin an der Reaktion beteiligt ist, also die lsocyanate mit den Carbonsäuren umgesetzt werden, gilt die Regel: Auf ein Äquivalent Isocyanat kommen 0,1 bis 4, vorzugsweise 0,8 bis 1,4 Äquivalente Carbonsäure und 0,0001 bis 0,5, vorzugsweise 0,001 bis 0,1 Äquivalente tertiärer Amin-Katalysator. Falls also Polycarbonsäuren oder Hydroxy- bzw. Amino-Carbonsäuren eingesetzt werden, kann auf den Zusatz von Polyolen ganz verzichtet werden.

Für den Fall, daß die mehrwertigen Isocyanate überwiegend mit Hydroxycarbonsäuren umgesetzt werden, sollen die Amine vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den obengenannten Pyridin- und Imidazol-Derivaten können noch weitere Katalysatoren zugesetzt werden, vor allem metallorganische Verbindungen wie Zinn(II)salze von Carbonsäuren, starke Basen wie Alkali-Hydroxide, -Alkoholate und -Phenolate, z.B. Di-n-octyl-Zinn-mercaptid, Dibutylzinn-maleat, -diacetat, - dilaurat, -dichlorid, -bisdodecyl-mercaptid, Zinn-II-acetat, -ethylhexoat und - diethylhexoat oder Blei-phenyl-ethyl-dithiocarbaminat. Die metallorganischen Katalysatoren können auch alleine eingesetzt werden, wenn bestimmte Carbonsäuren verwendet werden, nämlich Hydroxy- und Amino-Carbonsäuren. Als Trimerisierungs-Katalysator sei DABCO TMR-2 usw. der Fa. Air Products genannt, wobei es sich um in Ethylglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den lsocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Die Katalysatoren können auch in oligomerisierter oder polymerisierter Form vorliegen, z.B. als N-methyliertes Polyethylenimin.

Wenn Wasser als zusätzliches Treibmittel oder Kettenverlängerungsmittel verwendet wird, kann es zweckmäßig sein, ein aliphatisches tertiäres Amin als Katalysator zu verwenden. In der Regel wird dann das Wasser in einer Menge vom 0,1 bis 15, insbesondere von 0,3 bis 5 Gew.-%, bezogen auf das Polyurethan verwendet.

Die PU-Bindemittel des erfindungsgemäßen Formkörpers haben neben der Amidgruppe aufgrund der Carbonsäure/Isocyanat-Reaktion noch HarnstoffGruppen, wenn die Isocyanate mit H₂O reagieren. Sie enthalten zusätzlich noch Urethan-Gruppen, wenn die Isocyanate mit Polyolen, mit Polyhydroxycarbonsäuren oder mit der Cellulose reagieren; und sie enthalten noch Ester-Gruppen, wenn die Carbonsäuren und Alkohole reagieren.

Durch die Einbeziehung der Carbonsäure-lsocyanat-Reaktion in die Treibgas-Bildung wird die Polymerholzherstellung weitgehend unabhängig von dem Wassergehalt der Holzteilchen und des cellulosehaltigen Materials. So kann beispielsweise eine hauptsächlich auf der Carbonsäureumsetzung des Polyisocyanats beruhende Treibreaktion mit einer Reaktion der Hydroxylgruppen von Holz und Cellulose sowie der Feuchtigkeit dieser Materialien mit dem Polyisocyanat gekoppelt werden. Dabei läßt sich diese Reaktion auf Feuchtigkeiten der Materialien zwischen 0 und 25 % justieren. Es hat sich aber auch gezeigt, daß durch Nutzung der Carbonsäure-Treibgas-Reaktion bei 0 bis 25 % Materialfeuchte und Umsetzungen mit 5 bis 50 % lsocyanatüberschuß (bezogen auf die Carbonsäure-isocyanatreaktion) konstante Eigenschaften des Polymerholzes erzielt werden können.

Die Menge der Reaktionspartner Polyisocyanat, Polyol und Carbonsäure wird so gewählt, daß das Polyisocyanat im Überschuß eingesetzt wird. Das heißt, es liegt ein Äquivalenzverhältnis von NCO- : OH-Gruppen von 5 : 1, vorzugsweise aber von 2 : 1 bis 1,2 : 1 vor, ganz besonders bevorzugt ist ein Isocyanat-Überschuß von 5 bis 50 %.

In dem erfindungsgemäßen Formkörper liegen die Holzteilchen in Form von Holzspänen und/oder Holzmehl bzw. als cellulosehaltiges Material in Teilchengrößen von maximal 5 mm Dicke, 20 mm Breite und 50 mm Länge vor. Bevorzugt ist ein Dickenbereich vion 0,5 bis 3 mm, ein Breitenbereich von 1 bis 15 mm und ein Längenbereich von 3 bis 40 mm. Zweckmäßig sind Holzteilchen in Form von Holzspänen oder Holzmehl mit Teilchengrößen von maximal 1 mm Dicke, maximal 20 mm Breite und maximal 50 mm Länge.

Nach einer bevorzugten Ausführungsform des erfindungsgemäßen Formkörpers werden als Holzausgangsstoff Weichholzarten, z.B. Hölzer der Fichte, Kiefer, Tanne, Lärche, Birke, Erle, Roßkastanie, Föhre, Espe, Weide, Pappel und Linde verwendet. Es können aber auch Hartholzarten, wie beispielsweise Buche, Weißdorn, Schlehe, Esche, Ahorn, Nußbaum, Apfelbaum, Birnbaum, Eibe oder Eiche, eingesetzt werden. Auch Mischungen beliebiger Weichholzarten mit Hartholzarten können eingesetzt werden.

Als cellulosehaltiges Material werden im erfindungsgemäßen Formkörper pflanzliche Fasern, beispielsweise Baumwolle, Jute, Flachs, Hanf, Bast, Sisal, Ramie, Koskosfasern, Yuccafasern oder Manila oder chemisch modifizierte Fasern wie die Viskosefasern Reyon und Zellwolle, Cuoxamfasern, Acetatfasern und Papier- und Zellstoff-Garne, eingesetzt. Bevorzugt sind Baumwolle, Jute, Flachs, Hanf und Zellwolle.

Die Feuchte bzw. der Feuchtegehalt der Holzteilchen bzw. des cellulosischen Materials im erfindungsgemäßen Formkörper beträgt üblicherweise 5 bis 20 Gew.-%. Er kann gegebenenfalls durch Befeuchtung mit Wasser oder Wasserdampf erhöht oder durch Trocknung bei erhöhter Temperatur erniedrigt werden. Bevorzugt entspricht der Feuchtegehalt aber der Gleichgewichtsfeuchte des Materials bei Umgebungstemperatur.

Die erfindungsgemäßen Formkörper können z.B. Drähte, Kabel, Drahtnetze, Stangen oder ähnliches als Einlagen oder Verstärkungsmittel enthalten.

Das Gewichtsverhältnis der Komponente B) zu der Komponente A) liegt im Bereich von 0,05 bis 1,0, vorzugsweise im Bereich von 0,08 bis 0,25.

Ein weiterer Gegenstand der vorliegenden Erfindung ist die Bereitstellung eines Herstellverfahrens für einen derartigen Formkörper, wobei man a) die Holzteilchen und/oder das cellulosehaltige Material zunächst mit einem Reaktanden der Komponente B - sei es das Polyisocyanat, sei es das Polyol oder Polyamin, einschließlich der Carbonsäure sowie gegebenenfalls Wasser - mischt, b) zu dieser Mischung den oder die weiteren Reaktanden, insbesondere das Polyisocyanat im Überschuß hinzugibt, diese Mischung homogenisiert, c) diese homogenisierte Mischung in eine gegebenenfalls Trennmittel aufweisende druckdichte Form gibt, das Polyisocyanat unter einem Anfangsdruck von wenigstens 1 kp/cm² umsetzt und d) den Formkörper nach dem Abkühlen der Form entnimmt bzw. von der Form befreit.

Es ist bevorzugt, daß die vorgenannten Misch- und Reaktionsschritte bei Temperaturen von 10 bis 30 °C, insbesondere bei Raumtemperatur (18 - 25 °C) durchgeführt werden. Zweckmäßigerweise wird die Umsetzung der IsocyanatGruppen jedoch bei 80 bis 120 °C vorgenommen. Dann werden wesentlich höhere Festigkeitswerte erhalten, insbesondere Biegefestigkeiten.
Die Druckbehandlung nach dem erfindungsgemäßen Verfahren erfolgt durch die Umsetzung der Reaktionsmischung unter Eigenreaktionsdruck. Es ist jedoch wesentlich, einen Anfangsdruck, also noch bevor die Gasbildung gestartet wird, von wenigstens 1 kg/cm² anzuwenden. Der Gesamt-Druck (Eigenreaktionsdruck + Anfangsdruck) sollte im Bereich von maximal 1 bis 200, vorzugsweise von 30 bis 180 kp/cm² liegen.

Im erfindungsgemäßen Verfahren beträgt die Reaktionszeit in der Form und somit die Bildung des Formkörpers 5 bis 30 Minuten, vorzugsweise 10 bis 20 Minuten.

Im erfindungsgemäßen Verfahren setzt man zweckmäßig druckdichte Formen ein. Die Form des erfindungsgemäßen Formkörpers ist im Prinzip beliebig. Seine bevorzugte Form ist die eines Würfels, Quaders, einer Platte, einer Leiste oder eines Zylinders.

Üblicherweise ist es nicht erforderlich, zwischen der Form und dem Formkörper ein Trennmittel vorzusehen, insbesondere eine Teflon®-Schicht. In bestimmten Fällen ist es aber bevorzugt, Acmos-Trennmittel für PUR mit den Typenbezeichnungen 39-5001, 39-4487, 37-3200 und 36-3182 einzusetzen.

Der erfindungsgemäße Formkörper weist folgende bemerkenswerte Eigenschaften auf:
- Er kann in beliebiger Form, also maßgeschneidert, beispielsweise in Form von Platten, Leisten, Würfeln, Quadern usw. hergestellt werden.
- Er ist als Leichtbaustoff geeignet, da er üblicherweise - in Abhängigkeit vom Druck, der Beschaffenheit der Holz- bzw. Cellulosematerialien (Größe und Größenverteilung) sowie der Polyurethan-Menge und -Zusammensetzung - eine Dichte von 0,40 - 1,0 g/cm³ aufweist. Er ist daher ein Substitut für leichte und mittlere Flachpreßplatten oder mittelharte bis harte Holzfaserplatten allerdings ohne die entsprechenden Formaldehydprobleme.
- Er ist bei Raumtemperatur in Wasser wenig quellbar, d.h. seine Dickenzunahme nach 24 Stunden in Wassr bei 20 °C ist < 5 bzw. 2 % bei Dicken von 6 bis 12 bzw. > 35 mm. Erst bei erhöhter Wassertemperatur von z.B. 70 °C beträgt die Dickenzunahme ca. 10 bis 20 %. Diese Beständigkeit gegenüber Wasser wird ohne Hydrophobierungsmittel (z.B. Paraffin) erreicht. Sie wird auf die Durchdringung der Holzteile durch die PU-Komponenten und deren Reaktion im Innern der Holzteilchen zurückgeführt. Als Reaktanden kommen in Frage: Polyisocyanate einerseits sowie Polyole, OH-Gruppen des Holzes, (Hydroxy)-Carbonsäuren und Wasser sowie Amine andererseits.
- Die mechanischen Eigenschaften liegen auf hohem Niveau, insbesondere die Festigkeiten und Elastizitätswerte.
- Anders als ein Großteil der heute noch eingesetzten Holzwerkstoffe sowie MDF-Platten ist er formaldehydfrei und schwer brennbar.
- Die Formkörper sind so elastisch, daß sich Holzschrauben mit einem Ø von 5 mm splitterfrei einschrauben lassen.
- Er ist weiter so formstabil, daß man Gewinde hineinschneiden kann für Spax-Schrauben, d.h. Schrauben mit einem breiten Gewinde.
- Er ist ohne weiteres lackierbar.
- Hervorzuheben ist schließlich seine Homogenität, d.h. es kommt nicht zu der sonst üblichen Schichtenbildung, insbesondere findet man auch nicht eine Innen- und Außenschicht.
- Alle Gebrauchseigenschaften der Formkörper sind dank der feuchtigkeitsunabhängigen Gasbildung gut zu reproduzieren.

Aufgrund dieser Eigenschaften eignet sich der erfindungsgemäße Formkörper für zahlreiche Verwendungen anstelle von Holzwerkstoffen und Kunststoffen.

Die vorliegende Erfindung betrifft schließlich die Verwendung des Formkörpers der vorgenannten Art oder hergestellt gemäß vorstehender Art in Form von Platten, Leisten, Würfeln, Quadern usw.. Weiter betrifft die vorliegende Erfindung auch die Verwendung dieses Formkörpers, der nach vorbeschriebener Art erhältlich ist, als Halbzeug oder Verkleidung im Feucht- oder Außen-Bereich, insbesondere im Baubereich. Außerdem kann der erfindungsgemäße Formkörper als Verpackungsmaterial, Bodenbelag, als Treppenstufen oder Dekorbalken verwendet werden. Diese vorgenannten Verwendungen des Formkörpers betreffen bevorzugt den Innenausbau von Fahrzeugen, insbesondere von Kraftfahrzeugen wie Personenkraftfahrzeugen und Campingfahrzeugen, aber auch von Wohnwagen, Schiffen und Flugzeugen. Alternativ können die erfindungsgemäßen Formkörper für dekorative Zwecke im Außenbereich oder im Haushalts- und gewerblichen Bereich, insbesondere im Küchen- und Sanitärbereich eingesetzt werden.

Die Erfindung wird im weiteren durch Ausführungsbeispiele näher erläutert.

### Beispiel 1:

### A) Ausgangsprodukte

### a) Polyolkomponente

| | Masseanteile |
|---|---|
| Dipropylenglykol | 21,00 |
| Glyzerin | 7,00 |
| Polypropylenglykol, Mn 400 | 56,52 |
| Rapsfettsäure | 14,00 |
| Tegostab 8404 (Fa. Goldschmidt) | 1,00 |
| N-Methylimidozol | 0,40 |
| Dibutylzinndilaurat | 0,08 |

### b) Isocyanatkomponente:

| | |
|---|---|
| Diphenylmethan-4,4'-diisocyanat | 140 |
| (Rohprodukt) | |

### B) Herstellung

15 kg von 1 bis 3 mm dicken Holzspänen aus Fichten-Buchen- und Pappelholz mit einer Spanlänge bis zu 1 cm wurden in einem Turbolentmischer mit 1,08 kg der Polyolkomponente 3 Min. lang vermischt. Nach Zugabe von 1,52 kg lsocyanat und weiterer Vermischung wurde die Mischung in eine Metallform überführt. Bei einem Preßdruck von 150 kp/cm² wurden 10 Min bei 80 °C gepreßt.
Die hergestellte Platte von 18 mm Dicke hat eine Dichte von 0,75 g/cm³, eine glatte Oberfläche und läßt sich wie Holz mechanisch bearbeiten, z.B. sägen, hobeln, schleifen, fräsen und bohren. In das Material läßt sich Gewinde schneiden.

### c) Eigenschaften

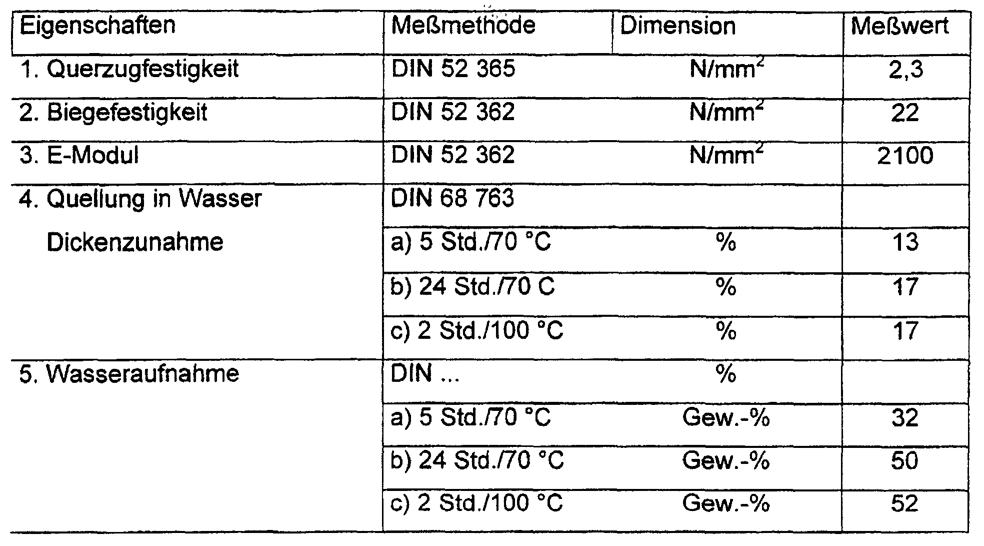

## Patentansprüche

1. Formkörper, bestehend im wesentlichen aus
A) Holzteilchen und/oder cellulosehaltigem Material (Komponente A) und
B) einem porösen PU-Bindemittel (Komponente B),
wobei das Gewichtsverhältnis der Komponente B) zu der Komponente A) im Bereich von 0,05 bis 1,0 liegt und
wobei der Formkörper durch Umsetzung mindestens eines Polyisocyanates mit mindestens einem Polyol und/oder Polyamin und mindestens einem Treibmittel in Gegenwart der Komponente A) bei einem Anfangsdruck von wenigstens 1 kp/cm² erhältlich ist, **dadurch gekennzeichnet, daß** das Treibmittel eine Carbonsäure enthält.

2. Formkörper nach Anspruch 1, **dadurch gekennzeichnet, daß** die Holzteilchen in Form von Holzspänen oder Holzmehl mit Teilchengrößen von maximal 1 mm Dicke, maximal 20 mm Breite und maximal 50 mm Länge eingesetzt werden.

3. Formkörper nach Anspruch 1, **dadurch gekennzeichnet, daß** als cellulosehaltiges Material pflanzliche Fasern wie Baumwolle, Jute, Flachs, Hanf oder chemisch modifizierte Fasern wie Zellwolle, eingesetzt werden.

4. Formkörper nach Anspruch 1, **dadurch gekennzeichnet, daß** das Polyisocyanat ein Di- oder Triisocyanat, insbesondere das Diphenylmethan-4,4'-diisocyanat (als Rohprodukt) ist.

5. Formkörper nach Anspruch 1, **dadurch gekennzeichnet, daß** das Polyol eine Diol/Triol-Mischung aus Polyether- und/oder Polyester-Polyolen ist.

6. Formkörper nach Anspruch 1, **dadurch gekennzeichnet, daß** die Carbonsäure aus Fetten herstellbar sind.

7. Formkörper nach mindestens einem der vorangegangenen Ansprüche, **gekennzeichnet durch** das Äquivalenz-Verhältnis von Alkohol-OH-Gruppen zu Carbonsäure-Gruppen im Bereich von 20 : 1 bis 1 : 20.

8. Formkörper nach mindestens einem der vorangegangenen Ansprüche, **dadurch gekennzeichnet, daß** er eine Dichte von 0,40 g/cm³ bis 1,0 g/cm³ aufweist.

9. Formkörper nach mindestens einem der vorstehenden Ansprüche, **dadurch gekennzeichnet, daß** er zusätzlich zu den Komponenten A und B weiterhin Einlagen oder Verstärkungsmittel wie beispielsweise Drähte, Kabel, Drahtnetze oder Stangen enthält (Komponente C).

10. Formkörper nach mindestens einem der vorangegangenen Ansprüche, **gekennzeichnet durch** seine Form als Würfel, Quader, Platte, Leiste oder Zylinder.

11. Verfahren zur Herstellung eines Formkörpers nach mindestens einem der vorstehenden Ansprüche, **dadurch gekennzeichnet, daß** man
a) die Holzteilchen und/oder das cellulosehaltige Material (Komponente A) zunächst mit einem Reaktanden der Komponente B mischt,
b) zu dieser Mischung die restlichen Bestandteile der Komponente B) hinzugibt und diese Mischung homogenisiert,
c) die homogenisierte Mischung in eine druckdichte Form gibt und das Polyisocyanat unter einem Anfangsdruck von wenigstens 1 kp/cm² umsetzt und
d) den Formkörper der Form entnimmt bzw. von der Form befreit.

12. Verfahren nach Anspruch 11, **dadurch gekennzeichnet, daß** die VerfahrensSchritte (a) bis (c) bei Temperaturen von 10 bis 30 °C, insbesondere bei Raumtemperatur (18 bis 25 °C) durchgeführt werden, wobei die Umsetzung (Schritt c) zweckmäßigerweise bei 80 bis 120 °C durchgeführt wird.

13. Verfahren nach Anspruch 11, **dadurch gekennzeichnet, daß** die Umsetzung der Reaktionsmischung in Schritt (c) mit einem Anfangsdruck von mehr als 1 kp/cm² und einem Gesamtdruck im Bereich von maximal 1 bis 200 kp/cm² erfolgt.

14. Verwendung des Formkörpers nach wenigstens einem der Ansprüche 1 bis 10 oder hergestellt nach wenigstens einem der Ansprüche 11 bis 13 als Halbzeug oder Verkleidung im Feuchtbereich oder Außenbereich, insbesondere im Baubereich.

15. Verwendung des Formkörpers nach Anspruch 14 für dekorative Zwecke im Außenbereich oder im Haushalts- und gewerblichen Bereich, insbesondere im Küchen- und Sanitärbereich.

16. Verwendung des Formkörpers nach wenigstens einem der Ansprüche 1 bis 10 oder hergestellt nach wenigstens einem der Ansprüche 11 bis 13 als Verpackungsmaterial, Bodenbelag, Treppenstufen oder Dekorbalken.

17. Verwendung des Formkörpers nach Anspruch 16 im Innenausbau von Fahrzeugen, insbesondere von Kraftfahrzeugen wie Personenkraftfahrzeugen und Campingfahrzeugen, aber auch von Wohnwagen, Schiffen und Flugzeugen.

## Claims

1. A moulding consisting essentially of
A) wood particles and/or cellulose-containing material (component A) and
B) a porous PU binder (component B),
the ratio by weight of component B) to component A) being in the range from 0.05 to 1.0:1 and the moulding being obtainable by reaction of at least one polyisocyanate with at least one polyol and/or polyamine and at least one blowing agent in the presence of component A) under an initial pressure of at least 1 kp/cm², **characterized in that** the blowing agent contains a carboxylic acid.

2. A moulding as claimed in claim 1, **characterized in that** the wood particles are used in the form of wood chips or wood flour with particle sizes of max. 1 mm (thickness) x max. 20 mm (width) x max. 50 mm (length).

3. A moulding as claimed in claim 1, **characterized in that** vegetable fibers, such as cotton, jute, flax, hemp, or chemically modified fibers, such as viscose staple, are used as the cellulose-containing material.

4. A moulding as claimed in claim 1, **characterized in that** the polyisocyanate is a diisocyanate or triisocyanate, more particularly diphenylmethane-4,4'-diisocyanate (crude product),

5. A moulding as claimed in claim 1, **characterized in that** the polyol is a diol/triol mixture of polyether and/or polyester polyols.

6. A moulding as claimed in claim 1, **characterized in that** the carboxylic acids can be produced from fats.

7. A moulding as claimed in at least one of the preceding claims,
**characterized by** an equivalent ratio of alcohol OH groups to carboxylic acid groups of 20:1 to 1:20.

8. A moulding as claimed in at least one of the preceding claims, **characterized in that** it has a density of 0.40 g/cm³ to 1.0 g/cm³.

9. A moulding as claimed in at least one of the preceding claims, **characterized in that**, in addition to components A and B, it also contains inserts or reinforcements such as, for example, wires, cables, wire netting or rods (component C).

10. A moulding as claimed in at least one of the preceding claims, **characterized by** its shape as a cube, square, panel, strip or cylinder.

11. A process for producing the moulding claimed in at least one of the preceding claims, **characterized in that**
a) the wood particles and/or the cellulose-containing material (component A) is/are first mixed with one reactant of component B,
b) the remaining constituents of component B) are added to the resulting mixture which is then homogenized,
c) the homogenized mixture is introduced into a pressure-tight mould and the polyisocyanate is reacted under an initial pressure of at least 1 kp/cm² and
d) the moulding is removed from the mould or freed from the mould.

12. A process as claimed in claim 11, **characterized in that** process steps (a) to (c) are carried out at temperatures of 10 to 30°C and more particularly at room temperature (18 to 25°C), the reaction (step (c)) preferably being carried out at 80 to 120°C.

13. A process as claimed in claim 11, **characterized in that** the reaction of the reaction mixture in step (c) is carried out under an initial pressure of more than 1 kp/cm² and a total pressure of at most 1 to 200 kp/cm².

14. The use of the moulding claimed in at least one of claims 1 to 10 or produced by the process claimed in at least one of claims 11 to 13 as a semifinished product or a lining material for humid environments or external applications, particularly in the building industry.

15. The use of the moulding claimed in claim 14 for decorative purposes outdoors or in the domestic and institutional sectors, more particularly in kitchens and bathrooms.

16. The use of the moulding claimed in at least one of claims 1 to 10 or produced by the process claimed in at least one of claims 11 to 13 as a packaging material, floor covering, stairsteps or ornamental beams.

17. The use of the moulding as claimed in claim 16 for the interior finishing of vehicles, more particularly motor vehicles, such as automobiles and camping vehicles, but also caravans, ships and aircraft.

## Revendications

1. Corps moulé, comportant essentiellement :
A) des particules de bois et/ ou une matière cellulosique (composant A) et
B) un liant à base de polyuréthanne poreux (composant B),
le rapport pondéral du composant B) au composant A) se trouvant dans la plage de 0,05 à 1,0, et
le corps moule pouvant être obtenu par réaction d'au moins un polyisocyanate, avec au moins un polyol et/ ou une polyamine, et au
moins un agent porogène en présence du composant A) à une pression initiale d'au moins 1 kp/cm²,
**caractérisé en ce que**
l'agent porogène est un acide carboxylique.

2. Corps moule selon la revendication 1, **caractérisé en ce que**
les particules de bois sont utilisées sous forme de copeaux de bois ou de sciure de bois ayant comme dimensions 1 mm d'épaisseur au maximum, 20 mm de largeur au maximum et 50 mm de longueur au maximum.

3. Corps moule selon la revendication 1, **caractérisé en ce que**
l'on utilise comme matière cellulosique, des fibres végétales comme le coton, le jute, le lin, le chanvre, ou des fibres chimiquement modifiées
comme la laine cellulosique.

4. Corps moule selon la revendication 1, **caractérisé en ce que**
le polyisocyanate est un di- ou tri-isocyanate, en particulier le 4,4'- diisocyanate de diphenylmethane (en tant que produit brut).

5. Corps moule selon la revendication 1, **caractérisé en ce que**
le polyol est un mélange diol/trial à base de polyéther- etlau polyesterpolyols.

6. Corps moulé selon la revendication 1, **caractérisé en ce que**
les acides carboxyliques peuvent être préparés à partir de corps gras.

7. Corps moulé selon au mains une des revendications précédentes, **caractérisé en ce que**
le rapport d'équivalence des groupes OH d'alcool aux groupes carboxyliques se situe dans la plage de 20/1 à 1/20.

8. Corps moulé selon au mains une des revendications précédentes, **caractérisé en ce qu'** il présente une masse volumique de 0,40 g/cm³ à 1,0 g/cm³.

9. Corps moulé selon au mains une des revendications précédentes, **caractérisé en ce qu** ,
il comporte en autre, en plus des composants A et B, des insertions au des éléments de renforcement, tels que des fils, des câbles, des treillis, au des tiges (composant C).

10. Corps moulé selon au mains une des revendications précédentes, **caractérisé en ce qu'** il a la forme d'un cube, d'un parallélépipède, d'une plaque, d'une bande au d 'un cylindre.

11. Procédé de fabrication d 'un Corps moulé selon au mains une des revendications précédentes,
**caractérisé en ce que**
(a) an mélange d'abord les particules de bais et/au la matière cellulosique (composant A) avec un des réactifs du composant B,
(b) an ajoute à ce mélange les constituants restants du composant B) et an homogénéise ce mélange,
(c) on introduit le mélange homogénéisé dans un moule étanche à la pression et on fait réagir le polyisocyanate sous une pression initiale d'au moins 1 kp /cm2, et
(d) on démoule le corps moulé ou on le libère du moule.

12. Procède selon la revendication 11, **caractérisé en ce que**
les phases du procède (a) à (c) sont mises en oeuvre à des températures de 10 à 30°C, en particulier à la température ambiante (18 à 25 °C), la
réaction (phase c) étant effectuée de préférence à une température comprise entre 80 à 120 °C.

13. Procède selon la revendication 11, **caractérisé en ce que**
la réaction du mélange réactionnel dans la phase (c) a lieu à une pression initiale de plus de 1 kp / cm² et à une pression totale se situant dans une plage de 1 à 200 kp / cm² maximum.

14. Utilisation du corps moule selon au moins une des revendications 1 à 10 ou fabriqué selon au moins une des revendications 11 à 13,
comme demi-produit ou revêtement en milieu humide ou à l'extérieur, en particulier dans le domaine de la construction.

15. Utilisation du corps moule selon la revendication 14,
a des fins décoratives, en extérieur ou dans les domaines domestique et industriel, en particulier dans les domaines culinaire et sanitaire.

16. Utilisation du corps moule selon au moins une des revendications 1 à 10 ou fabriqué selon au moins une des revendications 11 à 13,
comme matériau d'emballage, revêtement de sol, marches d'escalier ou poutres décoratives.

17. Utilisation du corps moule selon la revendication 16,
dans l'agencement intérieur de véhicules, en particulier de véhicules automobiles comme les voitures particulières et les véhicules de camping, mais aussi les caravanes, les bateaux et les avions.
